# EUROPÄISCHE PATENTSCHRIFT

(11) **EP 1 700 991 B1**
(45) Veröffentlichungstag und Bekanntmachung des Hinweises auf die Patenterteilung: **04.05.2011**
(21) Anmeldenummer: 06110966.6
(22) Anmeldetag: 10.03.2006
(51) Int. Cl.: E06B 3/54, E04F 13/14

(54) **Beschlag oder ein Beschlagteil zur Befestigung einer Glasscheibe**
Fitting for fixing a glass pane
Ferrure de fixation d'un panneau de verre

(30) Priorität: 11.03.2005 DE 102005011741
(43) Veröffentlichungstag der Anmeldung: 13.09.2006
(73) Patentinhaber: Dorma GmbH + Co. KG, 58256 Ennepetal (DE)
(72) Erfinder: Munch, Paul-Jean, 68910 Labaroche (FR)
(74) Vertreter: Borchert, Uwe Rudolf

(56) Entgegenhaltungen:
- EP-A- 0 655 543
- DE-A1- 19 536 331
- DE-A1- 19 859 888
- DE-U1- 20 110 192
- DE-U1- 20 219 452
- DE-U1- 20 302 370

## Beschreibung

Die Erfindung betrifft eine Befestigungsvorrichtung für einen Beschlag oder ein Beschlagteil an oder in einer Glasscheibe, wobei mindestens ein Befestigungselement gewählt wird, das zumindest bereichsweise ein Außengewinde aufweist und innerhalb einer eine Hinterschneidung aufweisende Sackbohrung in der Glasscheibe verankerbar ist. Das Befestigungselement weist ferner einen elastischen und/oder plastisch verformbaren Teil aus Kunststoff auf, der zur Verankerung innerhalb der Sackbohrung dient. Ferner umfasst die Erfindung eine Duschabtrennung bei der die Beschläge oder die Beschlagteile nach der vorgenannten Art befestigt werden.

Die EP 0 647 760 A2 beschreibt ein Befestigungselement zur Verankerung in, insbesondere aus Glas, bestehenden Platten. Das Befestigungselement besteht aus Metall und weist ein Spreizelement auf, das durch Einziehen und/oder Ausschieben auf einen Spreizkonus eines Spreizbolzens in einer eine Hinterschneidung aufweisende Bohrung verankerbar ist. Um eine sichere Verankerung zu ermöglichen, ist zwischen dem Spreizelement und der Wandung des hinterschnittenen Bohrloches ein elastisch und/oder plastisch verformbares Presselement aus weichem Kunststoff angeordnet. Das Spreizelement besteht dabei aus einem Drahtring.

Ein Stein- oder Glasverbundelement mit einem Hinterschnittdübel offenbart die DE 197 51 124 C1. Dort sind beispielsweise zwei Gläser, die durch eine PVB-Folie miteinander verbunden sind, dargestellt. Als Befestigungselement wird ein Hinterschnittdübel mit einem Spreizring, einer Hülse und einen vorstehenden Bolzen verwendet. Die Hülse durchdringt dabei vollständig die gebäudeseitige Platte des Plattenverbundes und teilweise mindestens eine gebäudeabgewandte daran anschließende Platte bis zum axialen Ende der Hülse formschlüssig.

Ein Befestigungselement für Doppelscheiben-Isolierglas kann der DE 201 10192 U1 entnommen werden. Dieser Veröffentlichung liegt die Aufgabe zugrunde, ein Befestigungselement mit einer erhöhten Sicherheit gegen Undichtheit an der Durchtrittsstelle des Befestigungselementes durch die innere Glasscheibe vorzuschlagen. Dabei handelt es sich um eine Isolierglasausführung, bei der eine äußere und innere Scheibe vorhanden sind. Die Lösung wird dadurch erreicht, dass ein Befestigungselement ein zweites, ringförmiges, einen Schacht umschließendes Dichtelement aufweist, das an einer der äußeren Glasscheiben zugewandten Seite der inneren Glasscheibe dichtend dann anliegt, wenn das Befestigungselement an der Doppel-Isolierglasscheibe befestigt ist. Hierdurch wird über ein ringförmiges, den Schacht umschließendes und den Schacht an der Durchdrückstelle durch die innere Glasscheibe zur äußeren hin abdichtendes Dichtelement geschaffen. Die Sicherheit gegen Undichtigkeit ist dadurch erhöht, dass beim Versagen eines der Dichtelemente ein weiteres Dichtelement abdichtet.

Die DE 203 02 370 U1 zeigt eine Duschabtrennung, bei der ein Verbindungselement formschlüssig in eine Ausnehmung eingreift. Dabei ist das Verbindungselement mehrteilig aufgebaut Die hinterschnittene Ausnehmung ist vorzugsweise rotationssymmetrisch hergestellt, so dass zwei im Wesentlichen halbkreisförmige, plattenartige Halteelemente in die Ausnehmungen eingesetzt werden können. Dabei wird anschließend ein Trägerelement mit einem insbesondere keilförmig ausgebildeten Vorsprung zwischen die Halteelemente geschoben und anschließend wird das Trägerelement mit den Halteelementen verschraubt.

Die Aufgabe der Erfindung besteht darin, eine Befestigungsvorrichtung für einen Beschlag oder ein Beschlagteil an oder in einer Glasscheibe, die als Einscheibensicherheitsglas ausgeführt ist, zu schaffen, die auf unterschiedlichste Art und Weise es ermöglicht, Beschläge verschiedenster Art so zu befestigen, dass die Glasscheibe an einer Außenseite keine Durchbrechungen aufweist und darüber hinaus eine einfache Montierbarkeit gewährleistet Die Befestigungsart soll gleichzeitig zu einer geringeren Belastung in/an und auf der Glasscheibe führen.

Gelöst wird die Aufgabe durch die Merkmale des Patentanspruches 1 in Verbindung mit den sich anschließenden Unteransprüchen, in denen eine weitere Ausgestaltung des erfindungsgemäßen Gedankens wiedergegeben ist Ferner umfasst die Erfindung eine Duschabtrennung nach Anspruch 8 mit einer Befestigungsvorrichtung mit der die Beschläge oder Beschlagteile gemäß den vorangegangenen Ansprüchen befestigt werden.

Eine Befestigungsvorrichtung für einen Beschlag oder Beschlagteile an/in einer Glasscheibe, mittels mindestens eines Befestigungselementes, das zumindest bereichsweise ein Außengewinde aufweist und innerhalb einer eine Hinterschneidung aufweisende Sackbohrung in der Glasscheibe verankerbar ist, ergibt auf der einen nicht durch die Hinterschnittsackbohrung unterbrochene Oberfläche der Glasscheibe eine glatte Außenfläche, die gut zu reinigen ist. Das Befestigungselement ist dabei innerhalb der Sackbohrung von einem elastischen und/oder plastisch verformbaren Element aus Kunststoff oder dergleichen umgeben. An dem Befestigungselement wird erfindungsgemäß ein Beschlagunterteil befestigt, so dass ein Kraftschluss mit der Oberfläche der Glasscheibe und dem Befestigungselement sichergestellt wird; es kommt dadurch zu einer Last- und gleichzeitig zu einer Belastungsverteilung. Hierzu ist zwischen der Oberfläche der Glasscheibe und dem Beschlagunterteil eine Schutzplatte vorhanden. Das Beschlagunterteil ist so konstruiert, dass an ihm ein Beschlagoberteil nachträglich befestigt werden kann. Durch diese Aufteilung wird die Belastung der Glasscheibe enorm verringert, weil so eine Lastverteilung auch über das Beschlagoberteil erfolgt. Die Verankerung in der Glasscheibe wird somit nur mit dem vorgegebenen notwendigen Anzugsmoment des Befestigungselementes belastet, wobei alle weiteren Belastungen von und über das Beschlagunterteil und im besonderen von dem Beschlagoberteil aufgenommen und verteilt werden.

Es sei angemerkt, dass bei den hier in Rede stehenden Beschlägen es sich um Beschläge jeglicher Art, vorzugsweise Bänder, Scharniere, Wandbefestigungen, Glasreiter, Betätigungsknöpfe usw. handelt. Dies trifft auch auf die nachfolgende Beschreibung zu.

Mit der vorgeschlagenen Befestigung des Beschlagunterteiles an dem Befestigungselement wird eine weitere Belastung des Befestigungselementes innerhalb der Sackbohrung verringert. Ein solches Beschlagunterteil kann beispielsweise auf das Außengewinde des Befestigungselementes aufgeschraubt oder in anderer Art daran befestigt werden. Erfindungsgemäß wird dann auf das Beschlagunterteil ein Beschlagoberteil jeglicher bereits vorgenannter Art so montiert, dass das Beschlagoberteil unter Verwendung einer Schutzplatte großflächig auf der Oberfläche der Glasscheibe aufliegt. Somit erwirkt auch das Beschlagoberteil eine größere gleichmäßigere Lastverteilung an der Glasscheibe.

Auch die Befestigung eines Beschlages oder eines Beschlagteiles an/in einer Glasscheibe, mittels mindestens einem Befestigungselement, das zumindest bereichsweise ein Außengewinde aufweist, und das innerhalb einer eine Hinterschneidung aufweisenden Sackbohrung in der Glasscheibe verankerbar ist, wobei das Befestigungselement innerhalb der Sackbohrung von einem elastischen und/oder plastisch verformbaren Element aus Kunststoff oder dergleichen umgeben ist, und dass an dem Befestigungselement ein Beschlagunterteil und ein Beschlagoberteil befestigt wird, erzielt ebenso eine bessere Druckverteilung auf der Glasscheibe. Dabei ist erfindungsgemäß vorgesehen, dass zwischen der Oberfläche der Glasscheibe und dem Beschlagoberteil eine Schutzplatte vorhanden ist, so dass ein Kraftschluss mit der Oberfläche der Glasscheibe sichergestellt wird.

Durch quasi eine Überkronung des gesamten Unterbeschlages, der in dieser Art und Weise nicht belastet wird, ergibt sich ebenfalls eine gleichmäßige Druckbelastung auf der Glasscheibe. Dieses ist insbesondere bei spröden Werkstoffen wie Glas von Vorteil.

Auf Grund der Merkmale des Patentanspruches 1 wird auf unterschiedlichste Art und Weise eine bessere Durckverteilung durch das unterschiedliche Anschlagen von Beschlägen oder Beschlagteilen an/in der spröden Glasscheibe erzielt.

Je nach Belastungsfall sind somit zwei Ausführungen beispielsweise möglich. Bei höheren Gewichten, beispielsweise einer Tür, kann auf eine andere Befestigungsart, wie z. B. in Patentanspruch 2 wiedergegeben, zurückgegriffen werden. Sind die Belastungen geringer, beispielsweise bei Wandwinkeln zur Befestigung von feststehenden Elementen, so kann ohne weiteres auf die Befestigungsart gemäß dem Patentanspruch 1 ausgewichen werden. In beiden Fällen kann das Beschlagunterteil recht kleingehalten werden, um eine nicht gewollte Vergrößerung des Beschlagoberteiles zu vermeiden. In einem solchen Falle reicht dann auch nur ein Befestigungselement pro Beschlagsseite (Bandlappen) aus.

Das Beschlagunterteil, das zum einen belastbar ist und zum anderen bei der zweiten Ausführungsform nicht belastet wird, kann z. B. als Scheibe ausgeführt werden. Eine solche Scheibe kann eine runde oder quadratische oder rechteckige oder sonstige gestaltete Form aufweisen. Vorzugsweise kann diese Scheibe als flache Scheibe ausgeführt werden, damit diese nicht zu einer unnützen Vergrößerung des Beschlages führt. Bei einer Belastung des Beschlagunterteiles kann die Scheibe beispielsweise auf ihrem Umfang eine Befestigungsmöglichkeit für ein Beschlagoberteil aufweisen. Hierzu kann vorzugsweise eine V-förmige Nut vorhanden sein. In einem solchen Falle wird in dem zu verwendenden Beschlagoberteil bei entsprechender maßlicher Abstimmung seitlich die Möglichkeit gegeben, dass dort Befestigungselemente eingeschraubt werden, z. B. Madenschrauben, um so gleichzeitig eine Möglichkeit eines Toleranzausgleiches zwischen dem Beschlagoberteil und dem Beschlagunterteil zu erreichen.

Das Beschlagunterteil wird vorzugsweise so gestaltet, dass es mit einem speziellen Werkzeug bei der Montage festgehalten wird, bzw. verstellt werden kann. Dieses ist insbesondere wichtig, da ein derartiges Befestigungselement innerhalb der Sackbohrung der Glasscheibe mit einem bestimmten Drehmoment angezogen werden muss. Um eine Veränderung des Drehmomentes und den dadurch auftretenden Kräfte zu vermeiden, wird erfindungsgemäß vorgeschlagen, ein spezielles Werkzeug zu verwenden, das nur die Möglichkeit bietet, das Beschlagunterteil im Werk festzusetzen. Durch eine solche Maßnahme wird einem Missbrauch auf einer Baustelle entgegengewirkt. Als einfaches jedoch wirksames Werkzeug können zwei beabstandete Stifte in mindestens zwei in dem Unterbeschlag vorhandenen Bohrungen eingreifen. Um das Befestigungselement entsprechend anziehen zu können, kann dieses an seinem herausragenden Ende entweder einen Schlitz oder einen Innensechskant oder Außensechskant oder Außenvierkant aufweisen, um so mit einem bestimmten Drehmoment das Befestigungselement innerhalb der Glasscheibe zu verankern.

Eine weitere Verbindung zwischen dem Beschlagunterteil und dem Beschlagoberteil kann darin bestehen, dass sowohl das Beschlagoberteil als auch das Beschlagunterteil durch eine Stiftverbindung miteinander verbunden werden. Durch eine solche Stiftverbindung kann nach erfolgter Festsetzung des Befestigungselementes mit dem richtigen Drehmoment eine sichere Verbindung zwischen dem Befestigungselement und dem Beschlagunterteil hergestellt werden.

In einer weiteren Ausführung kann das Beschlagunterteil so gestaltet sein, dass er seitliche vorstehende Bereiche aufweist, die einen konischen Verlauf aufweisen. Der konische Verlauf ist vorzugsweise so gestaltet, dass er die Möglichkeit bietet, durch Aufschieben eines Beschlagoberteiles einen sicheren Halt zwischen Unter- und Oberbeschlag sicherzustellen. Das Beschlagoberteil kann auch in diesem Falle mittels Schraubelemente justiert und festgesetzt werden.

Um eine ausreichende Möglichkeit eines Toleranzausgleiches zu haben, sind erfindungsgemäß die miteinander zu verbindenden Beschlagteile wie Beschlagoberteil und Beschlagunterteil so aufeinander abgestimmt, dass zwischen ihnen ein allseitiges ausreichendes Spiel vorhanden ist.

In einer weiteren Befestigungsmöglichkeit des Beschlagoberteiles an dem Beschlagunterteil kann diese darin gesehen werden, dass beispielsweise das Beschlagoberteil mit dem Beschlagunterteil durch einen Klebstoff und/oder einem Klettverschluss verbunden wird.

Die Schutzplatte zwischen dem Beschlagoberteil und der Glasscheibe kann als Hartzellstoffplatte ausgeführt werden. Eine solche Schutzplatte ermöglicht eine weitere gleichmäßige Druckverteilung auf der Oberfläche der Glasscheibe.

Eine Anwendung derartiger Verbindungen zwischen einem Beschlag und einer Glasscheibe kann insbesondere eine Duschabtrennung sein, die aus Ganzglas besteht und neben feststehenden Seitenteilen auch bewegliche Flügel beinhaltet. So können sowohl Seitenteil als auch Flügel mit einer derartigen vorbeschriebenen Befestigungsart sicher befestigt werden. Darüber hinaus ist die Innenfläche einer solchen Duschabtrennung durch keinerlei Bohrungen unterbrochen, so dass eine gute und leichte Reinigung der Oberfläche möglich ist.

Die Erfindung wird nachfolgend anhand der in den Zeichnungen dargestellten möglichen, schematischen dargestellten Ausführungsbeispiele näher erläutert.

Es zeigen:
- Fig. 1: einen seitlichen Schnitt durch eine Glasscheibe mit einem daran befestigten Beschlag einer Befestigungsvorrichtung in einer ersten Ausführungsform,
- Fig. 2: eine zweite Ausführungsform einer Befestigungsvorrichtung eines Beschlages in und auf einer Glasscheibe,
- Fig. 3: eine Befestigung eines Beschlagoberteiles an einem Beschlagunterteil mit drei Schraubele- menten,
- Fig. 4: wie Fig. 3 jedoch mit vier Befestigungselementen,
- Fig. 5: eine weitere Ausführungsart eines Unterbeschlagteiles mit darauf gesetztem Beschlagoberteil.

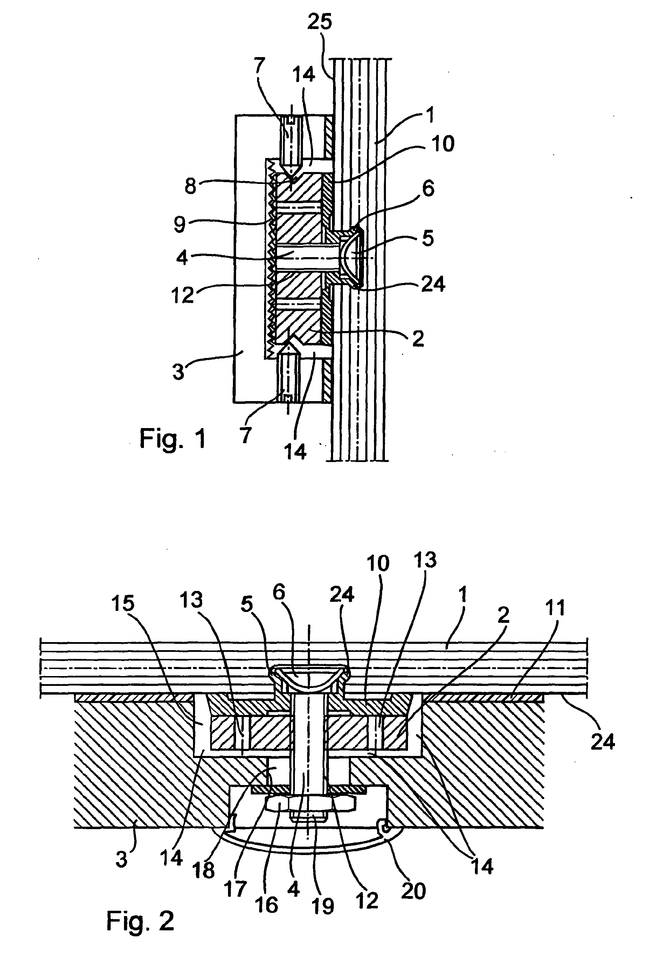

Die Figur 1 zeigt in der Schnittdarstellung eine Glasscheibe 1. Auf einer Oberfläche 25 ist ein Beschlag mit einem Beschlagunterteil 2 und einem darüber befindlichen Beschlagoberteil 3 verbunden. Das Beschlagunterteil 2 wird dabei durch ein Befestigungselement 4, das innerhalb einer einen Hinterschnitt 24 aufweisenden Sackbohrung 5 durch entsprechende Spreizelemente 6 verankert ist, befestigt. Zwischen dem Beschlagunterteil 2 und der Oberfläche 25 der Glasscheibe 1 befindet sich ein Distanzstück 10, das vorzugsweise zu dem Befestigungselement 4 gehört. Wie die Figur 1 deutlich macht, ist das Beschlagunterteil 2 über ein Außengewinde 12 mit dem Befestigungselement 4 verbunden. Um das Beschlagoberteil 3 genau auf das Beschlagunterteil 2 aufsetzen zu können, kann entweder ein Klettverschluss 12 verwendet werden oder aber zusätzlich bzw. auch allein eine Befestigung gewählt werden, die über seitliche Befestigungsmittel 7 an dem Beschlagunterteil 3 angreift. Die Befestigungsmittel 7 sind vorzugsweise als Madenschrauben ausgeführt. Der vorstehend beschriebene Beschlag ist somit nur zwischen dem Beschlagunterteil 2 und dem Beschlagoberteil 3 verbunden. Hierdurch wird eine gleichmäßige Druckverteilung auf der Oberfläche 25 des plattenförmigen Elementes 1 gewährleistet. Statt des Klettverschlusses 12 kann auch ein Klebstoff, der entsprechend geeignet ist, verwendet werden.

Um eine genaue Ausrichtung des Beschlagoberteiles 3 zu dem Beschlagunterteil 2 vornehmen zu können, weist das Beschlagunterteil 2 zu dem Beschlagoberteil 3 ein entsprechendes ausreichendes Spiel 14 auf.

Eine Befestigungsmöglichkeit des Beschlagoberteiles 3 auf andere Art und Weise, nämlich nicht an dem Beschlagunterteil 2 gibt die Figur 2 wieder. Wie bereits in der Figur 1 ist auch in der Figur 2 das Befestigungselement 4 in gleicher Art und Weise innerhalb der Glasscheibe 1 eingebettet Das Beschlagunterteil 2 wird mit dem Befestigungselement 4 kraft- und formschlüssig verbunden. Hierdurch wird ein gleichmäßiger und notwendiger Druck erzeugt, der einen sicheren Halt und gleichzeitig eine Vermeidung der Zerstörung der Glasscheibe 1 bedeutet. Um zur Befestigung ein entsprechendes Drehmoment aufbringen zu können, befinden sich innerhalb des Beschlagunterteiles 2 Bohrungen 13, die so maßlich aufeinander abgestimmt sind, dass hier ein Spezialwerkzeug angesetzt werden kann. Durch die Verwendung eines speziellen Werkzeuges ist sichergestellt, das beispielsweise auf der Baustelle keine Manipulation an dem Befestigungselement 4 und damit eine Veränderung der Anzugskraft erfolgen kann.

Das Beschlagoberteil 3 kann einen Freischnitt 15 aufweisen, in dem sowohl das Beschlagunterteil 2 als auch das zwischen der Oberfläche 25 und dem Beschlagunterteil 2 vorhandene Distanzstück 10 aufgenommen werden. Gleichzeitig ist dieser Freischnitt 15 so bemessen, dass allseitig zu dem Beschlagunterteil 2 ein Spiel 14 vorhanden ist. Das Spiel 14 wird einerseits dafür verwendet, um eine genaue Ausrichtung des Beschlages gegenüber anderen Beschlagteilen bzw. anderen Glasscheiben zu erreichen. Ferner ist aber auch das Spiel 14 dafür verantwortlich, dass eine entsprechende gleichmäßige Verteilung der Belastungen auf der Oberfläche 25 stattfindet. Hierzu weist das Beschlagoberteil 3 zu der Oberfläche 25 der Glasscheibe 1 eine Schutzplatte 11 auf.

Über diese Schutzplatte 11, die vorzugsweise aus einem Hartzellwerkstoff besteht, wird eine gleichmäßige Druckverteilung und damit auch eine bessere Druckverteilung auf eine größere Oberfläche erzielt. Denn gerade bei der Verwendung von Glas besteht die Gefahr, dass bei Überschreitung bestimmter Kräfteverhältnisse, die beispielsweise punktuell auftreten können, es zu einem Bruch der Glasscheibe 1 kommen kann. Das Beschlagoberteil 3 wird somit an dem Gewinde 12 des Befestigungselementes 4 über eine entsprechende Mutter 16 befestigt. Gleichzeitig besteht zwischen dem Außengewinde 12 und dem Beschlagoberteil 3 ein Spiel 18, damit auch in diesem Bereich eine gute Ausrichtung des Beschlages und damit ein ausreichender Toleranzausgleich möglich ist. Verschlossen werden kann z. B. der Verschraubungsbereich zwischen Befestigungselement 4 und Beschlagoberteil 3 durch eine entsprechende Kappe 20. Es versteht sich, dass jedoch auch der gesamte oder nur Teile des Beschlagoberteiles 3 durch einen weiteren Teil eines Beschlages, beispielsweise in Form einer Verkleidung, überkront werden können.

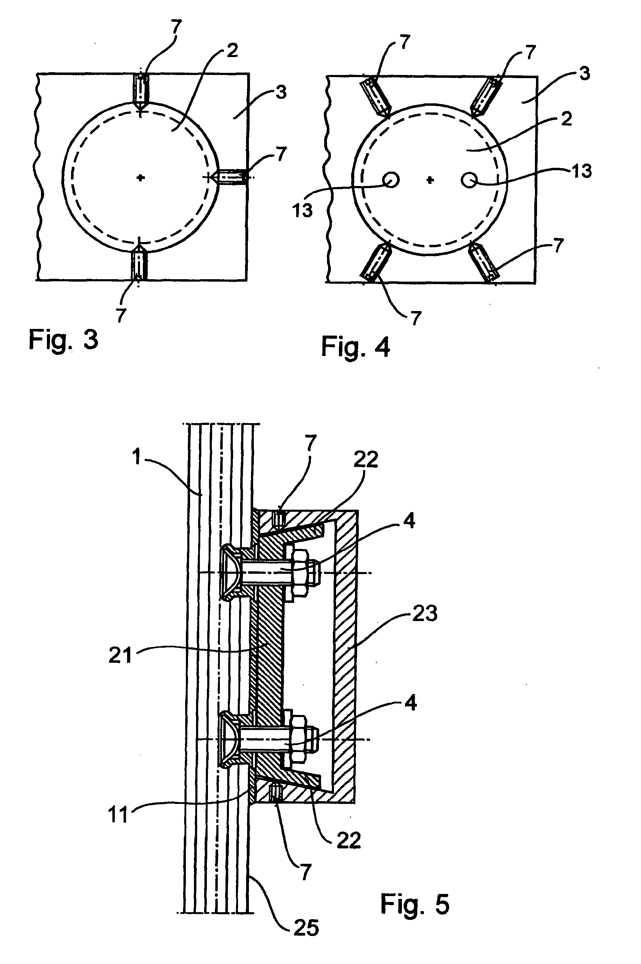

Um eine quasi nicht von vorn sichtbare Befestigung des Beschlagunterteiles 2 mit dem Beschlagoberteil 3 feststellen zu können, sind verschiedene Ausführungen in den Figuren 3 und 4 dargestellt. Das Beschlagunterteil 2 besteht dabei vorzugsweise aus einer Scheibe 2 mit einem runden Querschnitt. Innerhalb des äußeren Randes der Scheibe 2 befindet sich eine umlaufende Nut 8, in die entsprechende Befestigungsmittel 7 eingreifen. Die Befestigungsmittel 7 können vorzugsweise als Madenschrauben ausgeführt werden. Durch entsprechendes Herein- und Herausdrehen der Befestigungsmittel 7 ist auch hier eine problemlose Ausrichtung des Beschlagoberteiles 3 gegenüber dem Beschlagunterteil 2 möglich.

Die Figur 5 zeigt eine weitere Ausführungsform einer Befestigungsvorrichtung und auch gleichzeitig eine weitere Ausführung eines Beschlagunterteiles 21. Das Beschlagunterteil 21 ist über beispielsweise zwei Befestigungselemente 4, die in vor beschriebener Art und Weise innerhalb der Glasscheibe 1 verankert sind, befestigt. Es kann natürlich auch eine andere Anzahl von Befestigungen je nach Belastungsfall gewählt werden. Das Beschlagunterteil 21 weist einen Seitenbereich 22 auf, der keinen geraden, sondern einen konischen Verlauf zur Oberfläche 25 der Glasscheibe 1 aufweist. Somit ist es ausweislich der Figur 5 möglich, ein Beschlagoberteil 23 seitlich auf das Beschlagunterteil 21 aufzuschieben. Gesichert wird das Beschlagoberteil 23 auch in diesem Falle durch seitliche Befestigungsmittel 7, die gleichzeitig an dem Beschlagunterteil 21 angreifen.

### Bezugszeichenliste

- 1: Glasscheibe
- 2: Beschlagunterteil
- 3: Beschlagoberteil
- 4: Befestigungselement
- 5: Sackbohrung
- 6: Spreizelement
- 7: Befestigungsmittel
- 8: Nut
- 9: Klettverschluss
- 10: Distanzstück
- 11: Schutzplatte
- 12: Außengewinde
- 13: Bohrung
- 14: Spiel
- 15: Freischnitt
- 16: Mutter
- 17: Bohrung
- 18: Spiel
- 19: Schlitz
- 20: Kappe
- 21: Beschlagunterteil
- 22: Seitenbereich
- 23: Beschlagoberteil
- 24: Hinterschneidung
- 25: Oberfläche

## Patentansprüche

1. Befestigungsvorrichtung für einen Beschlag oder Beschlagteile an/in einer Glasscheibe (1), mittels mindestens eines Befestigungselementes (4), das zumindest bereichsweise ein Außengewinde (12) aufweist, und das innerhalb einer eine Hinterschneidung (24) aufweisenden Sackbohrung (5) in der Glasscheibe (1) verankerbar ist, wobei das Befestigungselement (4) innerhalb der Sackbohrung (5) von einem elastischen und/oder plastisch verformbaren Element aus Kunststoff oder dergleichen umgeben ist, und wobei an dem Befestigungselement (4) ein Beschlagunterteil (2, 21) so befestigt ist, dass ein Kraftschluss mit einer Oberfläche (25) der Glasscheibe (1) und dem Befestigungselement (4) sichergestellt wird, wobei zwischen der Oberfläche (25) und dem Beschlagunterteil (2, 21) ein Distanzstück (10) vorhanden ist, **dadurch gekennzeichnet, dass** an oder auf dem Beschlagunterteil 2, 21) ein Beschlagoberteil 3, 23) so befestigt, ist dass zwischen der Oberfläche (25) und dem Beschlagoberteil (3, 23) eine Schutzplatte (11) vorhanden ist, um einen sicheren Kraftschluss mit der Oberfläche (25) sicher zu stellen, und dass zwischen dem Beschlagunterteil (2, 21) und dem Beschlagoberteil (3, 23) ein allseitiges Spiel (14,18) vorhanden ist.

2. Befestigungsvorrichtung nach Anspruch 1, **dadurch gekennzeichnet, dass** das Beschlagunterteil (2, 21) eine Befestigungsmöglichkeit zur Befestigung des Beschlagoberteiles (3, 23) aufweist, wobei die Befestigungsmöglichkeit vorzugsweise an den äußeren Rändern des Beschlagunterteiles (2, 21) angeordnet ist.

3. Befestigungsvorrichtung nach Anspruch 1 oder 2, **dadurch gekennzeichnet, dass** das Beschlagunterteil (2) zwei beabstandete Bohrungen (13) zur Verwendung eines Werkzeuges für die Montage aufweist.

4. Befestigungsvorrichtung nach einem der vorhergehenden Ansprüche, **dadurch gekennzeichnet, dass** das Beschlagunterteil (21) einen konisch verlaufenden Seitenbereich (22) und/oder eine Nut (8) aufweist.

5. Befestigungsvorrichtung nach einem der vorhergehenden Ansprüche, **dadurch gekennzeichnet, dass** das Beschlagoberteil (3, 23) dazu geeignet ist auf das Beschlagunterteil (2, 21) geschoben zu werden, und durch Sicherungselemente (7) in der korrekten Stellung gehalten in werden und/oder durch einen Klettverschluss und/oder durch Klebstoff fixiert zu werden.

6. Befestigungsvorrichtung nach einem der vorhergehenden Ansprüche, **dadurch gekennzeichnet, dass** das Beschlagoberteil (3,23) dazu geeignet ist über das Gewinde (12) des Befestigungselementes (4) gegen die Oberfläche (25) der Glasscheibe (1) gezogen zu werden.

7. Befestigungsvorrichtung nach einem der vorhergehenden Ansprüche, **dadurch gekennzeichnet, dass** der Beschlag ein Scharnier oder ein Band oder ein Halteelement oder ein Haltewinkel oder ein Griff oder eine Befestigungsstange ist

8. Duschabtrennung aus Ganzglas, ausgestattet mit einem Beschlag oder mehreren Beschlägen mit einer Befestigungsvorrichtung gemäß den vorhergehenden Ansprüchen.

## Claims

1. A device for mounting a fitting or parts thereof on or within a glass pane (1) by means of at least one mounting element (4) which includes - at least in some area(s) thereof - an external thread (12) and which can be anchored within a blind hole (5) with an undercut (24) in said glass pane (1), wherein within said blind hole (5) said mounting element (4) is surrounded by a resilient and/or plastically deformable element made of a plastic material or the like, and wherein a lower fitting part (2, 21) is attached to said mounting element (4) so as to ensure a non-positive connection to a surface (25) of said glass pane (1) and said mounting element (4), with a spacer (10) being provided between said surface (25) and said lower fitting part (2, 21), **characterized in that** an upper fitting part (3, 23) is attached to or mounted on the lower fitting part (2, 21) in such a way that a protective plate (11) can be provided between said surface (25) and said upper fitting part (3, 23) so as to ensure a non-positive connection to said surface (25), and that there is play (14,18) on all sides between said lower fitting part (2, 21) and said upper fitting part (3, 23).

2. The mounting device of claim 1 **characterized in that** said lower fitting part (2, 21) has an attachment means for attaching said upper fitting part (3, 23), said attachment means being preferably disposed on the outer edges of said lower fitting part (2, 21).

3. The mounting device of claims 1 or 2 **characterized in that** said lower fitting part (2) has two bores (13) spaced from each other which are provided for the use of an assembly tool.

4. The mounting device of one of the preceding claims **characterized in that** said lower fitting part (21) has a tapering side region (22) and/or a groove (8).

5. The mounting device of one of the preceding claims **characterized in that** said upper fitting part (3, 23) is suitable for being slid onto said lower fitting part (2, 21) and for being held in the proper position by retaining elements (7) und/or for being fixed in position by means of a hook-and-eyelet fastener and/or glue.

6. The mounting device of one of the preceding claims **characterized in that** said upper fitting part (3, 23) is suitable for being pulled against the surface (25) of said glass pane (1) by means of the thread (12) of said mounting element (4).

7. The mounting device of one of the preceding claims **characterized in that** said fitting is a hinge or a band or a retaining element or an angle bracket or a handle or a mounting rod.

8. An all-glass shower enclosure exhibiting one or plural fitting(s) with a mounting device as defined in the above claims.

## Revendications

1. Dispositif de fixation pour une ferrure ou parties de ferrure d'un panneau de verre (1), au moyen d'au moins un élément de fixation (4) qui présente au moins partiellement un filetage extérieur (12) et qui peut être ancré dans le panneau de verre (1) à l'intérieur d'un alésage borgne présentant une contre-dépouille (24), sachant que l'élément de fixation (4)à l'intérieure de l'alésage borgne (5) est entouré d'un élément élastique et / ou plastiquement déformable en plastique ou similaire et sachant que sur l'élément de fixation (4) une partie inférieure de la ferrure (2, 21) est fixée de telle manière qu'entre la partie inférieure de la ferrure (2, 21) et la partie supérieure de la ferrure (3, 23), il existe un jeu circonférentiel (14, 18), qu'une adhérence avec une surface (25) du panneau de verre (1) et avec l'élément de fixation (4) est garantie, sachant qu'entre la surface (25) et la partie inférieure de la ferrure (2, 21) une entretoise (10) est disponible, **caractérisé en ce qu'** au niveau, ou sur la partie inférieure de la ferrure (2, 21), une partie supérieure de la ferrure (3, 23) est fixée de telle manière qu'entre la surface (25) et la partie supérieure de la ferrure (3, 23), une plaque de protection (11) est disponible, pour garantir une adhérence sécuritaire avec la surface (25).

2. Dispositif de fixation selon revendication 1, **caractérisé en ce que** la partie inférieure de la ferrure (2, 21) présente une possibilité de fixation pour la fixation de la partie supérieure de la ferrure (3, 23), sachant que la possibilité de fixation est placée de préférence au niveau des bords extérieurs de la partie inférieure de la ferrure (2, 21).

3. Dispositif de fixation selon revendication 1 ou 2, **caractérisé en ce que** la partie inférieure de la ferrure (2) présente deux alésages distants (13) en vue de l'utilisation d'un outil pour le montage.

4. Dispositif de fixation selon l'une des revendications précédentes, **caractérisé en ce que** la partie inférieure de la ferrure (21) présente une zone latérale en forme de cône (22) et / ou une encoche (8).

5. Dispositif de fixation selon l'une des revendications précédentes, **caractérisé en ce que** la partie supérieure de la ferrure (3, 23) est apte à être poussée sur la partie inférieure de la ferrure (2, 21) et à être maintenue en position correcte par des éléments de sécurité (7) et / ou à être fixée par une fermeture velcro® et / ou par de la colle.

6. Dispositif de fixation selon l'une des revendications précédentes, **caractérisé en ce que** la partie supérieure de la ferrure (3, 23) est apte à être tirée par le filetage (12) de l'élément de fixation (4) contre la surface (25) du panneau de verre (1).

7. Dispositif de fixation selon l'une des revendications précédentes, **caractérisé en ce que** la ferrure est une charnière ou une bande ou un élément d'arrêt ou un support d'angle ou une poignée ou une barre de fixation.

8. Séparation de douche en tout verre, équipé d'une ferrure ou plusieurs ferrures avec un dispositif de fixation selon les revendications précédentes.
